# EUROPÄISCHE PATENTSCHRIFT

(11) **EP 4 186 464 B1**
(45) Veröffentlichungstag und Bekanntmachung des Hinweises auf die Patenterteilung: **09.07.2025**
(21) Anmeldenummer: 21210619.9
(22) Anmeldetag: 25.11.2021
(51) Int. Cl.: A61C 13/00, B23Q 3/00

(54) **ROHLINGHALTER UND ROHLING**
BLANK HOLDER AND BLANK
PORTE-ÉBAUCHE ET ÉBAUCHE

(43) Veröffentlichungstag der Anmeldung: 31.05.2023
(73) Patentinhaber: Ivoclar Vivadent AG, 9494 Schaan (LI)
(72) Erfinder: LICHTENSTEIGER, Markus, 9462 Montlingen (CH); HELLMICH, Sven, 76694 Forst (DE)
(74) Vertreter: Baldus, Oliver

(56) Entgegenhaltungen:
- EP-A1- 3 995 106
- EP-A1- 4 151 358
- WO-A1-2011/029615
- WO-A1-2020/178439
- WO-A1-2021/048299
- DE-A1- 102018 000 727
- FR-A1- 3 089 782

## Beschreibung

Die Erfindung betrifft einen Rohlinghalter und Rohling, gemäß dem Oberbegriff der Ansprüche 1, sowie ein Verfahren zur Montage eines Rohlings an einem Rohlinghalter, gemäß dem Oberbegriff von Anspruch 14.

Es ist seit langem bekannt, Rohlinge für Dentalrestaurationsteilen in Scheibenform herzustellen und diese Rohlinge spanabhebend, also subtraktiv, zu bearbeiten und, um die Dentalrestaurationsteile herzustellen. Häufig weisen derartige Rohlinge eine solche Größe auf, dass eine Mehrzahl von Zähnen aus einem Rohling herstellbar sind.

Die spanabhebende Bearbeitung wird in der Regel in einer Fräsmaschine vorgenommen. Mit der Fräsmaschine fest verbunden ist ein Rohlinghalter, der seinerseits einen Aufnahmebereich für den Rohling hat.

Dort wird der Rohling eingespannt. Für die formschlüssige Lagerung muss der Rohlinghalter einen Teil des Rohlings übergreifen. Dieser Teil am Außenrand des Rohlings lässt sich nicht für die Herstellung von Dentalrestaurationsteilen verwenden.

Andererseits ist das für den Rohling verwendete Material vergleichsweise teuer. Um eine verbesserte Materialausnutzung zu erreichen, ist es bekannt geworden, einen vorspringenden umlaufenden Rand am Rohling bereitzustellen, einen sogenannten Xavex-Rand. An diesem wird der Rohling in den Aufnahmebereich eingespannt. Er weist etwa ein Drittel der Höhe des Rohlings auf, so das Material eingespart wird.

Es ist auch bekannt geworden, diesen umlaufenden Rand nicht aus dem Material des Rohlings herzustellen, sondern beispielsweise aus preisgünstigem Kunststoff und den Kunststoff Rand an dem Rohling in geeigneter Weise zu befestigen, beispielsweise durch Kleben. Auf diese Weise lässt sich das Rohlingmaterial vollständig ausnutzen.

Das Kunststoffmaterial ist in der Regel weniger druckfest als das Rohlingsmaterial, insbesondere, wenn der Rohling aus Keramik ist. Für die sichere und präzise Lagerung wird der Kunststoffrand daher in der Regel fest eingespannt.

Es ist auch bekannt, einen Adapter vorzusehen, der den Kunststoffrand fixiert, beispielsweise durch Spannschrauben, und selbst in dem Aufnahmebereich der Fräsmaschine gelagert ist.

Eine solche Lösung ist aus der WO 02/45 614 A1 bekannt. Die Lösung erfordert es, für den Wechsel des Rohlings, den Adapter aus der Fräsmaschine zu entnehmen und die vier Spannschrauben zu lösen. Dann muss der verbrauchte Rohling entnommen und ein neuer eingelegt werden. Die vier Spannschrauben müssen wieder eingesetzt und festgeschraubt werden und der Adapter samt Rohling in die Fräsmaschine eingespannt werden. Insgesamt ist diese Lösung daher recht aufwändig, so dass nicht verwunderlich ist, dass sie sich nicht durchgesetzt hat.

Die Druckschrift FR 3 089 782 A1 betrifft ein kundenspezifisch bearbeitetes Teil eines oder mehrerer Zahnprothesenelemente.

Die Druckschrift WO 2011/029615 A1 betrifft einen Zahnblock zur Fertigung von Zahnersatz mit daran befestigtem Halter für die maschinelle Bearbeitung des Zahnblocks.

Die Druckschrift DE 10 2018 000727 A1 betrifft eine Dentalfräsmaschine mit einem in einem Arbeitsraum vorgesehenen Werkstückhalter für einen Rohling, der in dem Arbeitsraum mit einem Fräswerkzeug zu bearbeiten ist. Ein rahmenloser Rohling wird im Werkstückhalter an seinem Aufnahmerand gegriffen und zur Fräsbearbeitung an seinem Aufnahmerand geklemmt im Werkstückhalter gehalten. Der Trägerkopf des Werkstückträgers besteht aus zwei Klemmbacken die den Außenumfang eines zu bearbeitenden Rohlings umgreifen. Die Klemmbacken umgreifen den Außenumfang des rahmenlosen Rohlings über bis zu 180° Umfangswinkel. Die Befestigung des Rohlings erfolgt durch ein Einklemmen des Außenrandes des Rohlings zwischen den beiden beweglichen Klemmbacken.

Die Druckschrift EP 3 995 106 A1, veröffentlicht am 11.05.2022, beansprucht das Prioritätsdatum des 06.11.2020 und ist Stand der Technik nach Art. 54(3) EPÜ und betrifft eine Dentalfräsmaschine mit einem in einem Arbeitsraum vorgesehenen Werkstückhalter für einen Rohling, der in dem Arbeitsraum mit einem Fräswerkzeug zu bearbeiten ist. Ein kreisringförmiger Dentalronden-Haltering ist an einer Dentalronde angebracht. Die Lagerung des Halterings in dem Fräshalter erfolgt über ein außen vollständig umlaufendes Formschlussprofil, wie beispielsweise einem Schwalbenschwanzprofil. Dieses dient der Befestigung des Halterings zusammen mit der Dentalronde in einem weiteren Fräshalter.

Die Druckschrift EP 4 151 358 A1, veröffentlicht am 22.03.2022, beansprucht das Prioritätsdatum des 16.09.2021 und ist Stand der Technik nach Art. 54(3) EPÜ und betrifft ein Verfahren zum Halten eines Rohlings sowie eine Haltevorrichtung für einen Rohling, mit einem ersten Halteelement zum Einlegen des Rohlings und einem zweiten Halteelement zum Einspannen des Rohlings, das durch eine Drehbewegung an dem ersten Halteelement arretierbar ist.

WO2020178439A betrifft eine Vorrichtung zur Befestigung eines für die Herstellung mindestens einer Zahnrekonstruktion vorgesehenen Rohlings an einer Haltevorrichtung einer für die Bearbeitung des Rohlings vorgesehenen Bearbeitungsmaschine.

Dem gegenüber liegt der Erfindung die Aufgabe zugrunde, einen Rohlinghalter und Rohling gemäß dem Oberbegriff des Anspruchs 1 sowie ein Verfahren gemäß dem Oberbegriff des Anspruchs 14 zu beschaffen, die trotz hohe Wiederholgenauigkeit und Präzision beim Fräsen von Dentalrestaurationsteilen einen verbesserten Arbeitsablauf bietet.

Diese Aufgabe wird erfindungsgemäß durch einen Gegenstand nach dem Anspruch 1 oder 14 gelöst. Vorteilhafte Weiterbildungen ergeben sich aus den Unteransprüchen.

Erfindungsgemäß weist der Rohling an seinem Außenrand eine Führungsschale auf. Die Führungsschale erstreckt sich über einen Teil des Außenrandes des Rohlings, beispielsweise über ein Viertel des Außenrandes. Erfindungsgemäß weist der Rohlinghalter mit seinem Aufnahmebereich ein Formschlussprofil auf. Ein solches Profil weist typischerweise eine Hinterschneidung auf. Mit einem solchen Profil lässt sich der Rohling an seiner Führungsschale einspannen, auch wenn diese lediglich an einer Seite des Rohlings vorgesehen ist.

Zur sicheren Lagerung kann beispielsweise das Formschlussprofil die Führungsschale übergreifen. Das Formschlussprofil ist bevorzugt einstückig. Die Verbindung zwischen dem Formschlussprofil und der Führungsschale ist so gestaltet, dass in einer - translatorischen (nicht erfindungsgemäß) oder rotatorischen
- Raumrichtung eine Relativbewegung möglich ist. In den beiden anderen Raumrichtungen ist die Verbindung hingegen fest, ermöglicht also keine Bewegung von Formschlussprofil und Führungsschale relativ zueinander.

In der Raumrichtung, die die Bewegung ermöglicht, besteht bevorzugt eine spielfreie Lagerung.

In den beiden anderen Raumrichtungen bestehen je Anschläge und Hinterschneidungen, die die erwünschte Fixierung sicherstellen.

Bevorzugt ist diese dreidimensionale Kombinationslagerung in den beiden anderen Raumrichtungen auch momentenstabil, vermag also auch Scherkräfte aufzunehmen.

Erfindungsgemäß ist eine einseitige Lagerung des Rohlings an dem Rohlinghalter vorgesehen. Der Rohling ist also nicht ringsum abgestützt, sondern nur an einer seiner Seiten. Bei eckigen Rohlingen kann die Abstützung an einer der Seitenflächen erfolgen, bei runden Rohlingen über einen Bogen oder Teilkreis, der sich über weniger, bevorzugt über deutlich weniger als 180 Grad erstreckt.

Die Aufnahme von Scherkräften und die Abstützung gegen diese ist besonders bei der einseitigen Lagerung wichtig. Diese erfolgt erfindungsgemäß dadurch, dass das Formschlussprofil die Führungsschale hintergreift oder übergreift, und zwar bevorzugt zwei voneinander beabstandeten Stellen.

Bei einem scheibenförmigen Rohling erstreckt sich die Scheibenachse durch die Mitte der Scheibe. Die beabstandeten Stellen liegen dann parallel zur Scheibenachse betrachtet entfernt voneinander.

Nach den Hebelgesetzen betrachtet erstreckt sich dann der Lastarm zwischen den Stellen, und der Lastarm senkrecht zu diesem, entsprechend dem Abstand zwischen dem Fräser und der Verbindungslinie zwischen den Stellen.

Aus dieser Überlegung ergibt sich, dass die Verbindungslinie zwischen den Stellen möglichst lang sein sollte, um eine gute Abstützung zu gewährleisten. Erfindungsgemäß erfolgt das Lagern des Rohlings an dem Aufnahmebereich auf sehr einfache Weise: Der Rohling wird mit seiner Führungsschale kurzerhand in das Formschlussprofil eingedreht oder eingeschoben. Die Relativbewegung erfolgt in Längsrichtung des Profils und damit entlang dem Außenrand des scheibenförmigen Rohlings. Führungsschale und Formschlussprofil haben einen zueinander passenden Querschnitt. In einer Lagerposition füllt die Führungsschale den Aufnahmebereich aus.

Wenn der Rohling eine runde Scheibenform hat, erstreckt sich die Führungsschale bogenförmig an seinem Außenrand, über ein Zehntel bis zu ¾ des Außenrandes, beispielsweise über ¼. Das Formschlussprofil erstreckt sich ebenfalls bogenförmig über einen Teilkreis, der es noch ermöglicht, die Führungsschale mit dem Rohling so fluchtend zu einem Eingang des Formschlussprofils auszurichten, dass ein Eindrehen der Führungsschale in das Formschlussprofil möglich ist. Bei dieser Lösung ist die Summe der Winkelerstreckung von Formschlussprofil und Führungsschale weniger als 360 Grad, um das Ansetzen an den Eingang zu ermöglichen. Die Führungsschale des Rohlings wird in das Formschlussprofil eingedreht, bis die Lagerposition erreicht ist.

Der Durchmesser des runden scheibenförmigen Rohlings kann z.B. 95 mm bis 102 mm betragen, bei einer Höhe zwischen 10 mm und 35 mm.

Mit Eindrehen ist hier eine relative Drehbewegung von Führungsschale und Formschlussprofil bezeichnet, die mit dem Ansetzen der Führungsschale am Eingang des Formschlussprofils beginnt und mit dem Erreichen de Lagerposition endet.

Wenn der Rohling eine mehreckige, z.B. eine rechteckige oder quadratische Scheibenform hat, erstreckt sich die Führungsschale und das Formschlussprofil, nicht erfindungsgemäß, je gerade. Die Führungsschale ist an einer Seitenfläche, also am Rand, des scheibenförmigen Rohlings angebracht. Bei einer rechteckigen Scheibenform ist dies bevorzugt eine Längsseite und damit nicht eine Stirnseite. Das Formschlussprofil erstreckt sich über im wesentlichen die gleiche Länge wie sie die Führungsschale hat, wobei auch eine beträchtliche Längenabweichung, z.B. von 50% möglich ist. Die Führungsschale wird fluchtend zu einem Eingang des Formschlussprofils ausgerichtet, und die Führungsschale des Rohlings wird, nicht erfindungsgemäß, in das Formschlussprofil eingeschoben, bis die Lagerposition erreicht ist.

Bevorzugt ist die Führungsschale aus Kunststoff und an dem Rohling befestigt, z.B. durch Kleben. Sie überragt die Rohlingscheibe nach oben und nach unten. Die nach oben und unten vorspringenden Bereiche der Führungsschale bilden je eine Hinterschneidung. Diese Bereiche werden von dem Formschlussprofil übergriffen und sorgen für eine stabile und sichere Lagerung der Rohlingscheibe an dem Aufnahmebereich. Die Führungsschale ist damit formschlüssig und spielfrei in dem Formschlussprofil gelagert. Der Profilquerschnit des Formschlussprofils ist z.B. C-förmig mit aufeinander zu weisenden Endschenkeln, die die genannten Bereiche oder Vorsprünge der Führungsschale übergreifen.

In einer alternativen Ausgestaltung ist insofern eine kinematische Vertauschung vorgesehen. Dann übergreift die Führungsschale des Rohlings das Formschlussprofil des Rohlinghalters.

Der Rohling kann aus Keramik, z.B. aus Zirkondioxid, bestehen, aber auch aus Komposit oder Kunststoff wie PMMA. Im letzteren Falle kann die Führungsschale auch einstückig mit dem Rohling im übrigen ausgebildet sein.

Das Formschlussprofil ist an einem Werkstückarm einer Fräsmaschine angebracht. Es ist in sich einstückig. Sein Querschnitt ist über die Längserstreckung des Profils konstant, abgesehen ggf. von Einführschrägen, die an dem Profil und/oder an der Führungsschale angebracht sein können.

In vorteilhafter Ausgestaltung der Erfindung ist es vorgesehen, dass der scheibenförmige Rohling einen seine Höhenmitte überdeckenden, radial nach außen vorspringenden Rand aufweist, an welchem die Führungsschale abgestützt ist.

In weiterer vorteilhafter Ausgestaltung der Erfindung ist es vorgesehen, dass der Rohlinghalter zwei- oder mehrteilig ausgebildet ist und die Maschinenaufnahme von dem Aufnahmebereich mit dem Formschlussprofil trennbar und an diesem insbesondere einrastend fixierbar ist, wobei insbesondere die Maschinenaufnahme eine metallische Struktur aufweist und der Aufnahmebereich für die Aufnahme der Führungsschale aus Kunststoff wie PPA oder PEI besteht.

In vorteilhafter Ausgestaltung der Erfindung ist es vorgesehen, dass der Rohlinghalter aus Kunststoff wie PPA, insbesondere aus faserverstärktem Kunststoff, besonders bevorzugt aus PEI, besteht und zusammen mit dem Rohling als vorgefertigte Einheit an oder in einer Fräsmaschine aufnehmbar ist.

In vorteilhafter Ausgestaltung der Erfindung ist es vorgesehen, dass der Rohling aus Kunststoff, insbesondere PMMA, besteht und die Führungsschale einstückig mit dem Rohling ausgebildet ist.

In vorteilhafter Ausgestaltung der Erfindung ist es vorgesehen, dass der Rohling zwei einander gegenüberliegende Führungsschalen trägt und dass ein Zweit-Rohlinghalter dem Rohlinghalter gegenüberliegend an dem Rohling gelagert ist oder lagerbar ist, welcher für den Werkstückwechsel von einem Werkstückarm einer Fräsmaschine greifbar ist.

Erfindungsgemäß ist auch ein Verfahren zur Montage eines Rohlings an einem Rohlinghalter vorgesehen. Dieses zeichnet sich dadurch aus, dass eine Führungsschale vor der Montage an dem Außenumfang des Rohlings befestigt, insbesondere aufgeklebt, wird. Der Rohling mit der Führungsschale wird bei diesem Verfahren in ein Formschlussprofil eines Aufnahmebereichs des Rohlinghalters eingedreht.

Dies geschieht, bis der Rohling mit der Führungsschale in einer Rastposition an einem Anschlag einschnappt und fixiert wird.

Durch das insofern erreichte Fixieren des Rohlings in der Rastposition ist dessen Lage im Raum - bezogen auf den Rohlinghalter - bekannt. Ein Rohling, aus dem z.B. nur ein ausgefräst ist, kann bei Bedarf entnommen und durch einen anderen, z.B. aus einem anderen Material ersetzt werden.

Bei Bedarf kann dann der erste Rohling wieder eingesetzt und in die Rastpostion verbracht werden. Dann kann ein anderes Dentalrestaurationsteil an einer anderen Stelle als der Zahn ausgefräst werden.

Bei dieser Lösung ist es bevorzugt, an dem Rohling einen Identifikationscode, z.B. einen QR-Code anzubringen, um so seine Daten über einen entsprechenden Sensor in der Fräsmaschine abspeichern zu können.

Wenn der Rohlinghalter an seiner dem Rohling gegenüberliegenden Seite eine Maschinenaufnahme mit einer Lagerplatte und einem aus dieser herausragenden Lagerzapfen aufweist, kann er mit seiner Maschinenaufnahme für die automatische Bestückung eines Werkstückarm einer Fräsmaschine geeignet sein. Weitere Vorteile, Einzelheiten und Merkmale der Erfindung ergeben sich aus der nachstehenden Beschreibung der Erfindung anhand der Zeichnung.

Es zeigen:
- Fig. 1: eine schematische perspektivische Darstellung einer Ausführungsform eines erfindungsgemäßen Rohlings und des erfindungsgemäßen Rohlinghalters in der Rastposition;
- Fig. 2: die Ausführungsform gemäß Fig. 1 in getrennter Anordnung von Rohling und Rohlinghalter;
- Fig. 3: die Anordnung von Rohling und Rohlinghalter ineinander angesetztem Zustand, bei dem eine Führungschale des Rohlings mit dem Rohlinghalter fluchtet;
- Fig. 4: das Einführen der Führungsschale des Rohlings in das formschlussprofil des Rohlinghalters durch Drehen zueinander;
- Fig. 5: der Rohlinghalter aus einer anderen Blickrichtung, unter Darstellung von Lösevorrichtungen, mit denen je eine Rastnase des Rohlinghalters außer Eingriff von Rastausnehmungen des Rohlings bringbar ist;
- Fig. 6: der Rohling mit der Führungsschale unter Darstellung der Rastausnehmungen, kurz nachdem die Führungschale auf den Außenumfang des Rohlings aufgeklebt ist;
- Fig. 7: ein bogenförmiges Formschlussprofil des Rohlinghalters von der radial inneren Seite, unter Darstellung der Rastnasen;
- Fig. 8: eine schematische Darstellung einer anderen Ausführungsform nicht gemäß der Erfindung, unter Verwendung eines eckigen Rohlings und eines eckigen Formschlussprofils;
- Fig. 9: eine schematische perspektivische Darstellungbeiner anderen Form einer Führungsschale;
- Fig. 10: eine schematische Darstellung einer anderen Ausführungsform nicht gemäß der Erfindung, unter Verwendung eines eckigen Rohlings und eines geraden Formschlussprofils mit zwei einander gegenüberliegenden Führungsschalen des Rohlings; und
- Fig. 11: eine andere nicht erfindungsgemäße Ausführungsform von Führungsschale und Formschlussprofil bei welcher die Führungsschale das Formschlussprofil übergreift.

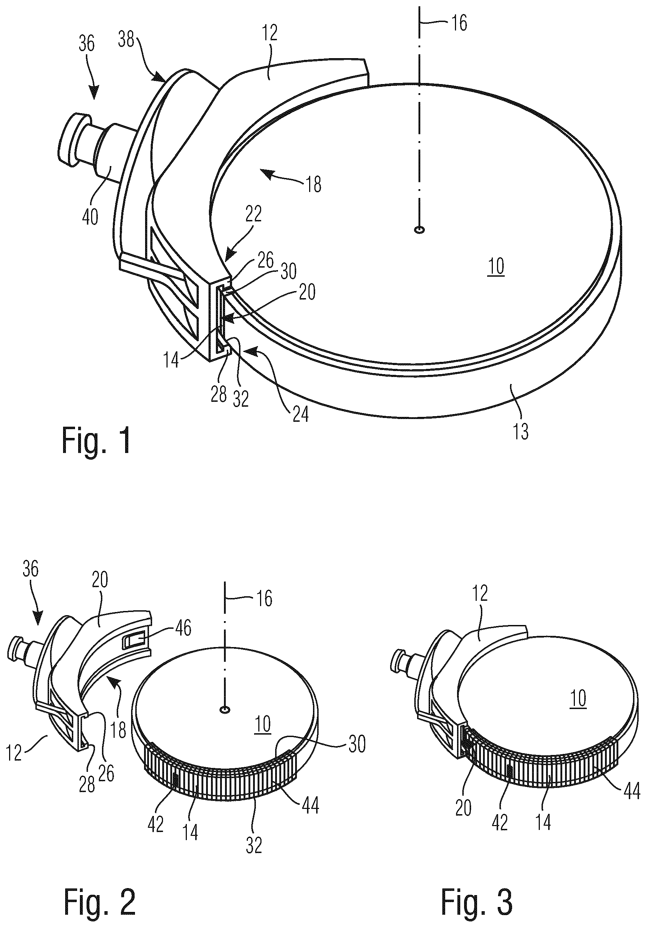

Die in Fig. 1 dargestellte Ausführungsform zeigt einen Rohling 10 und einen Rohlinghalter 12, die miteinander fest gelagert und verbunden sind.

Der Rohling ist scheibenförmig und in dieser Ausführungsform kreisförmig und hat einen vorspringenden Rand 13.

Der Rohling weist an seinem Außenumfang eine Führungsschale 14 auf. Die Führungsschale 14 ist auf dem Rand 13 aufgeklebt oder in beliebiger anderer Weise auf diesem befestigt.

Durch den scheibenförmigen Rohling erstreckt sich eine Scheibenachse 16 senkrecht zur Haupt-Erstreckungsrichtung des Rohlings.

Parallel zu der Scheibenachse 16 betrachtet erstreckt sich die Führungsschale 14 über den Rohling 10 hinaus. In der Darstellung gemäß Fig. 1 springt die Führungsschale 14 also nach oben und unten vor.

Bei einem Durchmesser des Rohlings von etwa 10 cm beträgt das Vorsprungmaß wenige Millimeter, z.b. 1 bis 5 mm.

Die Führungsschale kann ebenfalls wenige Millimeter dick sein und, wie z.b. ebenfalls 1 mm bis 5 mm.

Für die Aufnahme des Rohlings 10 weist der Rohlinghalter 12 einen Aufnahmebereich 18 auf.

An diesem Aufnahmebereich ist ein Formschlussprofil 20 ausgebildet. Dieses ist so beschaffen, dass die Führungsschale 14 des Rohlings 10 genau in es hinein passt. Das Formschlussprofil 20 übergreift die Führungsschale 14 an zwei voneinander beabstandeten Stellen 22 und 24.

Das Formschlussprofil 20 ist im Wesentlichen C-förmig. Es weist Endschenkel 26 und 28 auf. Die Endschenkel 26 und 28 übergreifen die Führungsschale 14. Sie erstrecken sich über Vorsprünge 30 und 32, an denen die Führungsschale 15 parallel zur Scheibenachse 16 betrachtet endet. Die Vorsprünge 30 und 32 werden insofern von dem Formschlussprofil 20 übergriffen.

Die Abmessungen von Führungsschale 14 und Formschlussprofil 20 sind aneinander angepasst. Damit lagert das Formschlussprofil 20 die Führungsschale 14 spielfrei.

An der dem Formschlussprofil 20 gegenüberliegenden Seite weist der Rohlinghalter 12 eine Maschinenaufnahme 36 auf. Diese besteht aus einer Lagerplatte 38 und einem aus dieser vorspringenden Lagerzapfen 40. Eine solche Maschinenaufnahme 36 ist an sich bekannt und dient dazu, von dem Werkstückarm einer Fräsmaschine gegriffen und aufgenommen werden zu können

Aus Fig. 2 ist ersichtlich, wie die Innenseite des Formschlussprofils 20 ausgestaltet ist. Das Formschlussprofil weist, wie bei Profilen üblich, über seinen Verlauf einen gleichbleibenden Querschnitt auf. Dieser ist im betrachteten Ausführungsbeispiel C-förmig, kann aber auch eine beliebige geeignete andere Form haben, die in der Lage ist, die Führungsschale 14 des Rohlings 10 zu übergreifen.

Gemäß Fig. 2 ist der Rohling 10 noch getrennt von dem Rohlinghalter 12. Es ist ersichtlich, dass die Führungsschale mit den Vorsprüngen 30 und 32 den Rohling parallel zur Scheibenachse 16 in deren Erstreckung überragt, und zwar in beide Richtungen, also in der Fig. 2 betrachtet nach oben und nach unten.

Die Führungsschale 14 ist auf dem Rohling 10 aufgeklebt. Sie besteht aus Kunststoff. Die Führungsschale 14 kann anstelle dessen auch auf den Rohling 10 aufgespritzt, aufgeschrumpft oder aufgeschweißt werden.

Die Führungsschale 14 erstreckt sich parallel zur Scheibenachse 16 betrachtet an dem Rand 13 entlang. Der Rand 13 lässt oben und unten Ecken frei, an denen der Rohling 10 gleichsam zurücktritt. In diese Ecken hinein erstreckt sich auch das Material der Führungsschale 14. Damit ergibt sich zusätzlich zum Materialschluss auch ein Formschluss zwischen der Führungsschale 14 und dem Rohling 10.

Die Führungsschale 14 erstreckt sich über einen Winkel von 90° am Außenumfang des Rohlings. Dieser Erstreckungswinkel kann auch wesentlich weniger betragen, beispielsweise auch nur 20 oder 30 Grad. Er kann bis zu 270 Grad betragen, wenn sich das Formschlussprofil 20 über 90° erstreckt.

Die Summe der Erstreckungswinkel des Formschlussprofils 20 und der Führungsschale 14 darf erfindungsgemäß nicht mehr als 360° betragen. Dies liegt darin begründet, dass der Rohling an einer Stelle in das Formschlussprofil eingeführt werden muss, die frei von der Führungsschale ist. Lediglich dann lässt sich die Führungsschale in das Formschlussprofil eindrehen.

Aus Fig. 2 sind auch Rastausnehmungen 42 und 44 ersichtlich. Diese sind an der Führungsschale 14 passend zu Rastnasen an dem Rohlinghalter 12 ausgebildet, von denen eine Rastnase 46 in Fig. 2 ersichtlich ist.

Der in das Formschlussprofil eingesetzte Zustand des Rohlings ist aus Fig. 3 ersichtlich. In dieser Position fluchtet das Formschlussprofil 20 mit der Führungsschale 14.

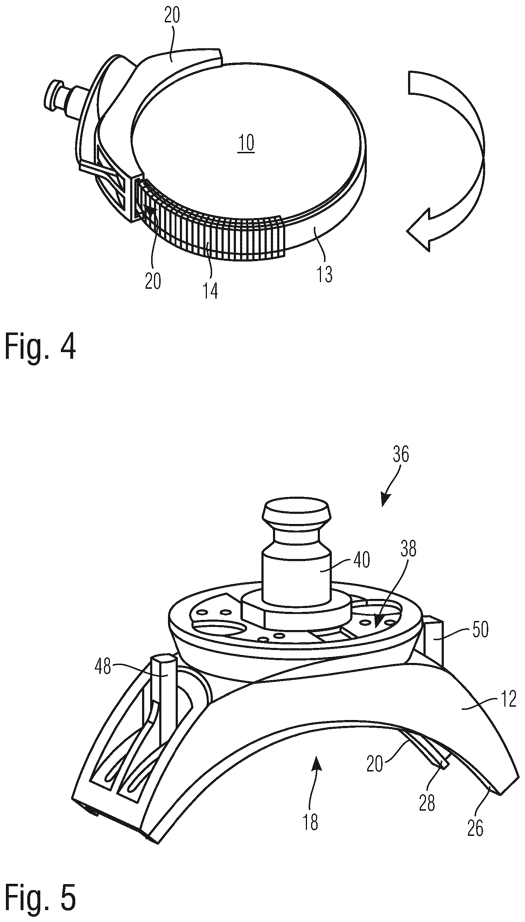

Durch Drehen in die in Fig. 4 angedeutete Richtung lässt sich der Rohling mit seiner Führungsschale in das Formschlussprofil und damit in den Rohlinghalter eindrehen.

Aus Fig. 5 ist der Rohlinghalter 12 von hinten ersichtlich. Man erkennt zwei Lösevorrichtungen 48 und 50. Diese sind fest mit den Rastnasen 46 verbunden und über eine Lagerzunge 52 beweglich mit dem Rohlinghalter.

Die Lagerzungen 52 drücken die Rastnasen 46 in Richtung der Führungsschale 14. Wenn die Drehposition erreicht ist, in der die Rastausnehmung 42 mit der Rastnase 46 fluchtet, drückt die Lagerzunge die Rastnase 46 in die Rastausnehmung 42 hinein.

Durch manuelle Betätigung der Lösevorrichtungen 48 und 50 lassen sich die Rastnasen 46 zurückziehen. Dadurch geraten sie außer Eingriff der Rastausnehmungen 42 und 44. In diesem Zustand lässt sich der Rohling verdrehen und aus dem Formschlussprofil 20 herausdrehen, sodass der Rohling entnommen werden kann.

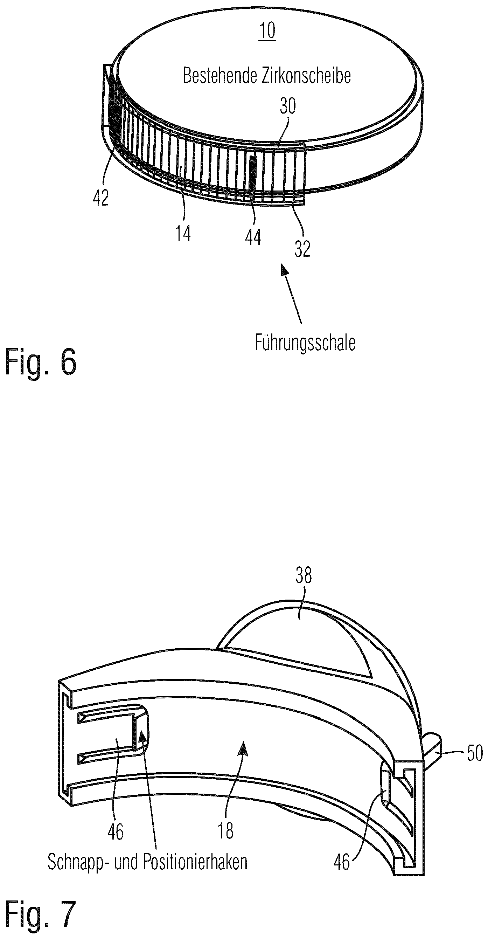

Aus Fig. 6 ist der Rohling 10 in vergrößerte Darstellung ersichtlich. Es kann auch ein Rohling verwendet werden, der eine andere Größe oder ein anderes Material als der zuvor beschriebene Rohling aufweist. Wichtig ist nur, dass die auf dem Rohling angebrachte Führungsschale 14 eine zu dem Formschlussprofil 20 passende Form hat.

In Fig. 7 ist der Rohlinghalter 12 vergrößert dargestellt, unter Darstellung beider Rastnasen 46, die in die aus Fig. 6 ersichtlichen Rastausnehmungen 42 und 44 eingreifen können.

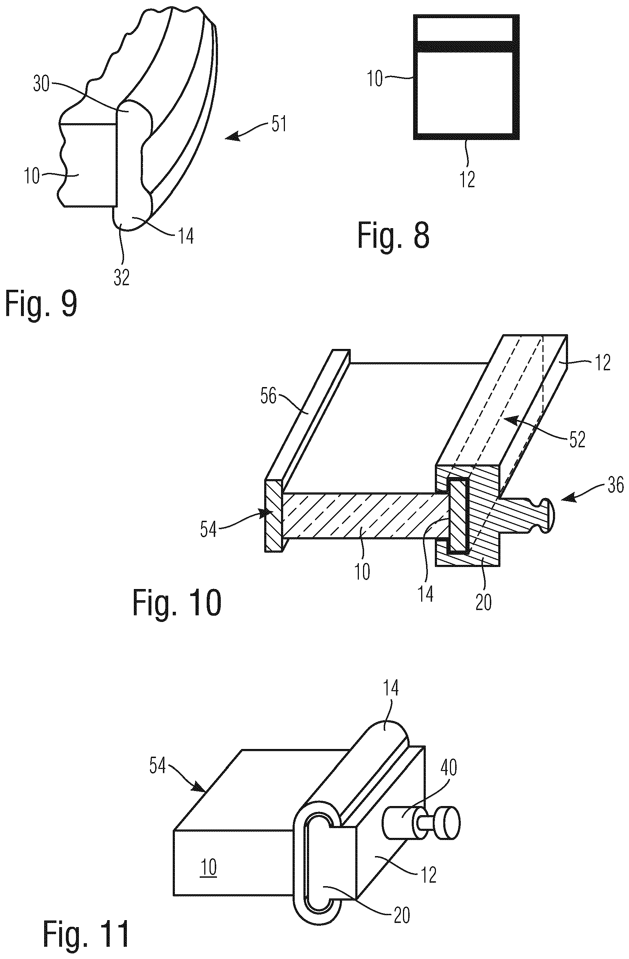

Aus Fig. 8 ist eine modifizierte Ausgestaltung nicht gemäß der Erfindung ersichtlich. Sowohl der Rohling 10 als auch der Rohlinghalter 12 sind nicht gebogen bzw. kreisförmig, sondern gerade. Die Führungsschale 14 ist bei dieser Ausführung ebenso gerade wie das Formschlussprofil 20. Auch bei einer solchen Form des Rohlings 10 mit einer geraden Seitenfläche ist dieser bevorzugt flach - und insofern scheibenförmig - und weist Ecken und Kanten auf.

Ein Beispiel für eine solche Form ist ein Flachquader, also ein Quader, dessen Höhe geringer als seine Breite und Tiefe ist.

Weitere Ausführungsformen einer solchen Ausgestaltung nicht gemäß der Erfindung sind aus Fig. 10 und Fig. 11 ersichtlich.

Aus Fig. 9 ist eine andere Ausgestaltung der erfindungsgemäßen Führungsschale 14 und indirekt damit des erfindungsgemäßen Formschlussprofils ersichtlich. Die Führungsschale erstreckt sich mit einer gerundeten und welligen Außenseite 51. Zu dem Querschnitt der Führungsschale 14 passend, das heißt in der gleichen Form, als Negativabbild, erstreckt sich das Formschlussprofil.

Dies gilt auch für die Ausführungsform gemäß Fig. 9.

Bei der nicht erfindungsgemäßen Ausführungsform gemäß Fig. 10 ist eine gerade Führungsschale 14 vorgesehen, die in einem geraden Formschlussprofil 20 geführt ist. Die Führungsschale 14 ist auch hier auf dem Rohling 10 in geeigneter Weise befestigt. Sie lässt sich durch eine translatorische Bewegung, eine gerade Bewegung, in das Formschlussprofil 20 einführen.

Bei der dargestellten Ausführungsform ist die Führungsschale 14 auf einer Seitenfläche 52 des Rohlings 10 aufgeklebt. Auf einer gegenüberliegenden Seitenfläche 54 ist eine weitere Führungsschale 56 befestigt, beispielsweise aufgeklebt. Diese lässt sich beispielsweise von einem Werkstückwechselarm greifen, oder aber unmittelbar in ein Formschlussprofil eines weiteren Rohlinghalters einschieben.

Alle Seitenflächen dieses im wesentlichen scheibenförmigen Rohlings zusammenbetrachtet bilden den Außenumfang des Rohlings 10.

Die Führungsschale 14 ist insofern stets am Außenumfang des Rohlings 10 befestigt.

Aus Fig. 11 ist eine weitere Ausführungsform einer nicht erfindungsgemäßen Kombination aus Rohling 10 und Rohlinghalter 12 ersichtlich. Bei dieser Ausführungsform übergreift die Führungsschale 14 des Rohlings 10 das Formschlussprofil 20 des Rohlinghalters 12.

Auch hier sind Formschlussprofil 20 und Führungsschale 14 von der Form her zueinander passend ausgebildet und es ist eine spielfreie Lagerung realisiert. Bei dieser Ausführungsform ist eine gerade Ausgestaltung vorgesehen. Es versteht sich, dass anstelle dessen auch eine bogenförmige Ausgestaltung möglich ist, ohne den Bereich der Erfindung zu verlassen.

In einem weiteren, nicht dargestellten Ausführungsbeispiel ist erfindungsgemäß eine Kombination von geraden und gebogenen Seitenflächen vorgesehen. Ein Beispiel hierfür ist eine Scheibe, die in der Draufsicht einen Halbkreis bildet. Die Führungsschale 14 kann bei einem solchen Rohling entweder an einer geraden oder an einer gebogenen Seitenfläche angebracht sein, und daher entweder eine gerade (nicht erfindungsgemäß) oder eine gebogene Form (erfindungsgemäß) haben. Das zugehörige Formschlussprofil 20 des Rohlinghalters 12 hat je eine hierzu passende Form, ist also gerade (nicht erfindungsgemäß) bei gerader Führungsschale 14 und gebogen (erfindungsgemäß) bei gebogener Führungsschale 14.

## Patentansprüche

1. Rohlinghalter (12) und scheibenförmiger Rohling (10), der Rohlinghalter (12) mit einem Aufnahmebereich (18) für den scheibenförmigen Rohling, wobei der Aufnahmebereich gebogen ist und der Rohling eine teilkreisförmige Führungsschale (14) aufweist, **dadurch gekennzeichnet, dass** der Aufnahmebereich ein teilkreisförmiges oder bogenförmiges Formschlussprofil (20) ausbildet, und die teilkreisförmige Führungsschale in das Formschlussprofil eindrehbar ist.

2. Rohlinghalter und Rohling nach Anspruch 1, **dadurch gekennzeichnet, dass** das Formschlussprofil die Führungsschale spielfrei lagert.

3. Rohlinghalter und Rohling nach einem der vorhergehenden Ansprüche, **dadurch gekennzeichnet, dass** das Formschlussprofil einstückig ist und/oder die Führungsschale übergreift.

4. Rohlinghalter und Rohling nach einem der vorhergehenden Ansprüche, **dadurch gekennzeichnet, dass** Formschlussprofil im Querschnitt C-förmig ist und aufeinander zu weisende Endschenkel (26,28) hat, die die Führungsschale oder einen Teil der Führungsschale hintergreifen und/oder übergreifen.

5. Rohlinghalter und Rohling nach einem der vorhergehenden Ansprüche, **dadurch gekennzeichnet, dass** die Führungsschale auf dem Rohling befestigt ist und sich kreis- oder teilkreisförmig entlang des Umfangs des Rohlings erstreckt.

6. Rohlinghalter und Rohling nach einem der vorhergehenden Ansprüche, **dadurch gekennzeichnet, dass** das Formschlussprofil und die Führungsschale beim Eindrehen oder Einschieben aneinander einrasten.

7. Rohlinghalter und Rohling nach Anspruch 6, **dadurch gekennzeichnet, dass** das Formschlussprofil mindestens eine auf die Führungsschale zu weisende Rastnase (46) aufweist, die mit mindestens einer Rastausnehmung (42) der Führungsschale zusammenwirkt, und insbesondere, dass die mindestens eine Rastnase radial einwärts vorgespannt ist, oder dass die Führungsschale mindestens eine auf das Formschlussprofil zu weisende Rastnase aufweist, die mit mindestens einer Rastausnehmung des Formschlussprofils zusammenwirkt, und insbesondere, dass die mindestens eine Rastnase auf das Formschlussprofil zu vorgespannt ist.

8. Rohlinghalter und Rohling nach Anspruch 7, **dadurch gekennzeichnet, dass** 2 in Umfangsrichtung voneinander beabstandete Rastnasen in einander entgegengesetzte Drehrichtungen des Rohlings wirken.

9. Rohlinghalter und Rohling nach einem der vorhergehenden Ansprüche, **dadurch gekennzeichnet, dass** der Rohling mit der Führungsschale durch Drehen in Längsrichtung des Formschlussprofils, ggf. unter Überwindung eine Rastkraft, von dem Formschlussprofil lösbar ist

10. Rohlinghalter und Rohling nach Anspruch 6 bis 9, **dadurch gekennzeichnet, dass** das Formschlussprofil eine Lösevorrichtung aufweist, mit welcher die mindestens eine Rastnase außer Eingriff der mindestens einen Rastausnehmung bringbar ist.

11. Rohlinghalter und Rohling nach einem der vorhergehenden Ansprüche, **dadurch gekennzeichnet, dass** die Führungsschale und/oder das Formschlussprofil an aufeinander zu weisenden Flächen mindestens eine Einführschräge aufweisen.

12. Rohlinghalter und Rohling nach einem der vorhergehenden Ansprüche, **dadurch gekennzeichnet, dass** die Führungsschale sich über mehr als 15 % des Umfangs und weniger als 100% des Umfangs des Rohlings erstreckt, insbesondere weniger als 50% des Umfangs des Rohlings erstreckt, besonders bevorzugt über 20% bis 30%.

13. Rohlinghalter und Rohling nach einem der vorhergehenden Ansprüche, **dadurch gekennzeichnet, dass** der Rohlinghalter an seiner dem Rohling gegenüberliegenden Seite eine Maschinenaufnahme (36) mit einer Lagerplatte (38) und einem aus dieser herausragenden Lagerzapfen (40) aufweist, welche Maschinenaufnahme für die automatische Bestückung eines Werkstückarms einer Fräsmaschine ausgebildet ist.

14. Verfahren zur Montage eines Rohlings (10) an einem Rohlinghalter (12), wobei eine teilkreisförmige Führungsschale (14) vor der Montage an dem Außenumfang des Rohlings befestigt, insbesondere aufgeklebt, wird, **dadurch gekennzeichnet, dass** der Rohling mit der : teilkreisförmigen Führungsschale in ein teilkreisförmiges oder bogenförmiges Formschlussprofil (20) eines Aufnahmebereichs (18) des Rohlinghalters eingedreht wird, bis der Rohling mit der Führungsschale in einer Rastposition an einem Anschlag einrastet und fixiert wird.

## Claims

1. A blank holder (12) and a disc-shaped blank (10), the blank holder (12) having a receiving area (18) for the disc-shaped blank, the receiving area being curved and the blank having a part-circular guide shell (14), **characterized in that** the receiving area forms a part-circular or arc-shaped form-fitting profile (20), and **in that** the part-circular guide shell can be turned into the form-fitting profile.

2. The blank holder and blank according to claim 1, **characterized in that** the form-fitting profile and the guide shell are mounted without play.

3. The blank holder and blank according to one of the preceding claims, **characterized in that** the form-fitting profile is made of a single piece and/or engages over the guide shell.

4. The blank holder and blank according to one of the preceding claims, **characterized in that** the form-fitting profile is C-shaped in cross-section and has end sections (26, 28) which point towards each other and engage behind and/or over the guide shell or a part of the guide shell.

5. The blank holder and blank according to one of the preceding claims, **characterized in that** the guide shell is fixed on the blank and extends circularly or part-circularly along the circumference of the blank.

6. The blank holder and blank according to one of the preceding claims, **characterized in that** the form-fitting profile and the guide shell engage with each other when turned or pushed in.

7. The blank holder and blank according to claim 6, **characterized in that** the form-fitting profile has at least one latching lug (46) pointing towards the guide shell, which latching lug cooperates with at least one latching recess (42) of the guide shell, and in particular **in that** the at least one latching lug is prestressed radially inwards, or **in that** the guide shell has at least one latching lug pointing towards the form-fitting profile and interacting with at least one latching recess of the form-fitting profile, and in particular in that the at least one latching lug is prestressed towards the form-fitting profile.

8. The blank holder and blank according to claim 7, **characterized in that** 2 latching lugs spaced apart from one another in the circumferential direction act in opposite directions of rotation of the blank.

9. The blank holder and blank according to one of the preceding claims, **characterized in that** the blank with the guide shell can be detached from the form-fitting profile by turning in the longitudinal direction of the form-fitting profile, if necessary by overcoming a latching force.

10. The blank holder and blank according to claims 6 to 9, **characterized in that** the form-fitting profile has a release device with which the at least one latching lug can be disengaged from the at least one latching recess.

11. The blank holder and blank according to one of the preceding claims, **characterized in that** the guide shell and/or the form-fitting profile have at least one lead-in chamfer on surfaces facing one another.

12. The blank holder and blank according to one of the preceding claims, **characterized in that** the guide shell extends over more than 15% of the circumference and less than 100% of the circumference of the blank, in particular less than 50% of the circumference of the blank, particularly preferably over 20% to 30%.

13. The blank holder and blank according to one of the preceding claims, **characterized in that** the blank holder has, on its side opposite the blank, a machine mount (36) with a bearing plate (38) and a bearing journal (40) projecting therefrom, said machine mount being configured for automatically loading a workpiece arm of a milling machine.

14. A method for mounting a blank (10) on a blank holder (12), wherein a part-circular guide shell (14) is fixed, in particular glued, to the outer circumference of the blank before mounting, **characterized in that** the blank with the part-circular guide shell is turned into a part-circular or arc-shaped form-fitting profile (20) of a receiving area (18) of the blank holder until the blank with the guide shell engages and is fixed in a latching position against a stop.

## Revendications

1. Porte-lingotin (12) et lingotin en forme de disque (10), le porte-lingotin (12) ayant une zone de réception (18) pour le lingotin en forme de disque, où la zone de réception est incurvée et le lingotin présente une coquille de guidage en forme de cercle partiel (14), **caractérisée en ce que** la zone de réception forme un profilé à liaison de forme en forme de cercle partiel ou en forme d'arc (20), et la coquille de guidage partiellement circulaire peut être vissée dans le profilé à liaison de forme.

2. Porte-lingotin et lingotin selon la revendication 1, **caractérisés en ce que** le profilé à liaison de forme supporte sans jeu la coquille de guidage.

3. Porte-lingotin et lingotin selon l'une des revendications précédentes, **caractérisés en ce que** le profilé à liaison de forme est monobloc et/ou s'étend jusqu'à la coquille de guidage.

4. Porte-lingotin et lingotin selon l'une des revendications précédentes, **caractérisés en ce que** le profilé à liaison de forme est de section transversale en forme de C et comporte des branches d'extrémité (26, 28) tournées l'une vers l'autre, qui s'engagent derrière et/ou par-dessus la coquille de guidage ou une partie de la coquille de guidage.

5. Porte-lingotin et lingotin selon l'une des revendications précédentes, **caractérisés en ce que** la coquille de guidage est reliée au lingotin et s'étend en forme de cercle ou de cercle partiel le long de la circonférence du lingotin.

6. Porte-lingotin et lingotin selon l'une des revendications précédentes, **caractérisés en ce que** le profilé à liaison de forme et la coquille de guidage s'enclenchent l'un sur l'autre lors du vissage ou de l'insertion.

7. Porte-lingotin et lingotin selon la revendication 6, **caractérisés en ce que** profilé à liaison de forme comporte au moins un ergot d'encliquetage (46) orienté vers la coquille de guidage, qui interagit avec au moins un évidement d'encliquetage (42) de la coquille de guidage, et en particulier **en ce que** l'ergot ou les ergots d'encliquetage sont précontraintes radialement vers l'intérieur, ou **en ce que** la coquille de guidage comporte au moins un ergot d'encliquetage orienté vers le profilé à liaison de forme qui interagit avec au moins un évidement d'encliquetage du profilé à liaison de forme et en particulier **en ce qu'**au moins un ergot d'encliquetage est précontrainte vers le profilé à liaison de forme.

8. Porte-lingotin et lingotin selon la revendication 7, **caractérisés en ce que** 2 ergots d'encliquetage espacées dans le sens circonférentiel agissent dans des sens de rotation opposés par rapport au lingotin.

9. Porte-lingotin et lingotin selon l'une des revendications précédentes, **caractérisés en ce que** le lingotin avec la coquille de guidage peut être détachée du profilé à liaison de forme par rotation dans le sens longitudinal du profil à liaison de forme, en surmontant éventuellement une force de verrouillage.

10. Porte-lingotin et lingotin selon les revendications 6 à 9, **caractérisés en ce que** le profilé à liaison de forme comporte un dispositif de déverrouillage au moyen duquel ledit au moins un ergot de verrouillage peut être amené hors de prise dudit au moins un évidemment d'encliquetage.

11. Porte-lingotin et lingotin selon l'une des revendications précédentes, **caractérisés en ce que** la coquille de guidage et/ou le profilé à liaison de forme présente au moins un chanfrein d'insertion sur des surfaces orientées l'une vers l'autre.

12. Porte-lingotin et lingotin selon l'une des revendications précédentes, **caractérisés en ce que** la coquille de guidage s'étend sur plus de 15 % de la circonférence du lingotin et moins de 100 % de la circonférence du lingotin, en particulier sur moins de 50% de la circonférence et de manière particulièrement préférée sur 20 % à 30 %.

13. Porte-lingotin et lingotin selon l'une des revendications précédentes, **caractérisés en ce que** le porte-lingotin comporte sur son côté opposé au lingotin, un logement de machine (36) avec une plaque d'appui (38) et un tourillon (40) dépassant de celui-ci, lequel logement de machine est conçu pour le chargement automatique d'un bras porte-pièce d'une fraiseuse.

14. Procédé de montage d'un lingotin (10) sur un porte-lingotin (12), où une coquille de guidage en forme de cercle partiel (14) est reliée, en particulier collée, sur la périphérie extérieure du lingotin avant l'assemblage **caractérisée en ce que** le lingotin avec la coquille de guidage en forme de cercle partiel est vissée dans un profil à liaison de forme en forme de cercle partiel ou en forme d'arc (20) d'une zone de réception (18) du porte-lingotin jusqu'à ce que le lingotin soit enclenché et reliée à la coquille de guidage sur une butée en position d'encliquetage.
